(19) Europäisches Patentamt / European Patent Office / Office européen des brevets

(11) **EP 2 441 973 B1**

(12) **FASCICULE DE BREVET EUROPEEN**

(45) Date de publication et mention
de la délivrance du brevet:
**20.09.2017 Bulletin 2017/38**

(51) Int Cl.:
***F16C 33/46*** *(2006.01)*

(21) Numéro de dépôt: **11184727.3**

(22) Date de dépôt: **11.10.2011**

(54) **Rouleau pour palier à contact de roulement**

Roller für ein Wälzlager

Roller for an anti-friction contact bearing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.10.2010 FR 1004024**

(43) Date de publication de la demande:
**18.04.2012 Bulletin 2012/16**

(73) Titulaire: **NTN-SNR Roulements
74010 Annecy (FR)**

(72) Inventeur: **Blanchin, Olivier
74000 Annecy (FR)**

(74) Mandataire: **Sayettat, Julien Christian
STRATO-IP
18, rue Soleillet
75020 Paris (FR)**

(56) Documents cités:
**FR-A- 1 001 372     GB-A- 181 156
GB-A- 1 288 474**

**Description**

L'invention s'applique en particulier à des rouleaux pour un palier de train épicycloïdal, notamment un roulement satellite de réducteur épicycloïdal pour boîte de transmission d'hélicoptère.

Dans cette application, il est connu d'utiliser des rouleaux pleins, notamment de géométrie sphérique en tonneau. Chaque rouleau présente une surface extérieure de révolution autour d'un axe de symétrie et une face latérale disposée de chaque côté de ladite surface extérieure. Ces rouleaux sont destinés à être montés dans le palier en étant disposés dans une cage de rétention de sorte à pouvoir tourner dans ledit palier autour de leur axe de symétrie en étant en appui sur leur surface extérieure.

Pour ce faire, les faces latérales des rouleaux peuvent présenter un renfoncement dans lequel une saillie axiale de la cage est engagée de sorte à maintenir en rotation chacun desdits rouleaux autour de leur axe de symétrie On connaît également, notamment des documents DE-10 2006 052 044 et FR-1001372, la réalisation d'un rouleau selon le préambule de la revendication 1.

Toutefois, les roulements satellites selon l'art antérieur présentent un poids important, qui est d'autant plus critique pour une application aéronautique dans laquelle de cinq à dix roulements sont classiquement embarqués dans un réducteur épicycloïdal équipant une boîte de transmission.

En outre, notamment dans cette application, les rouleaux sont soumis à de très forts cycles de charges / décharges qui induisent de la fatigue structurale.

L'invention a pour but de perfectionner l'art antérieur en proposant notamment des rouleaux pour palier à roulement qui présentent une masse réduite tout en répondant aux exigences fonctionnelles du palier, notamment relativement à la fatigue structurale desdits rouleaux sous l'effet des cycles de charges / décharges qu'ils subissent dans le temps.

A cet effet, et selon un premier aspect, l'invention propose un rouleau selon la revendication 1.

Selon un deuxième aspect, l'invention propose un palier à roulement comprenant un organe intérieur et un organe extérieur entre lesquels sont montés de tels rouleaux, lesdits rouleaux étant disposés dans une cage de rétention de sorte à pouvoir tourner autour de leur axe de symétrie en étant en appui sur lesdits organes par l'intermédiaire de leur surface extérieure.

D'autres objets et avantages de l'invention apparaîtront dans la description qui suit, faite en référence aux figures jointes dans lesquelles :

- la figure 1 montre en perspective écorchée un palier à roulement selon un mode de réalisation de l'invention ;
- la figure 2 montre en coupe longitudinale un rouleau selon un mode de réalisation de l'invention ;
- les figures 3a et 3b montrent en coupe longitudinale un rouleau selon respectivement une variante du mode de réalisation de la figure 2 ;
- la figure 4 montre en coupe longitudinale un rouleau selon un mode de réalisation de l'invention.

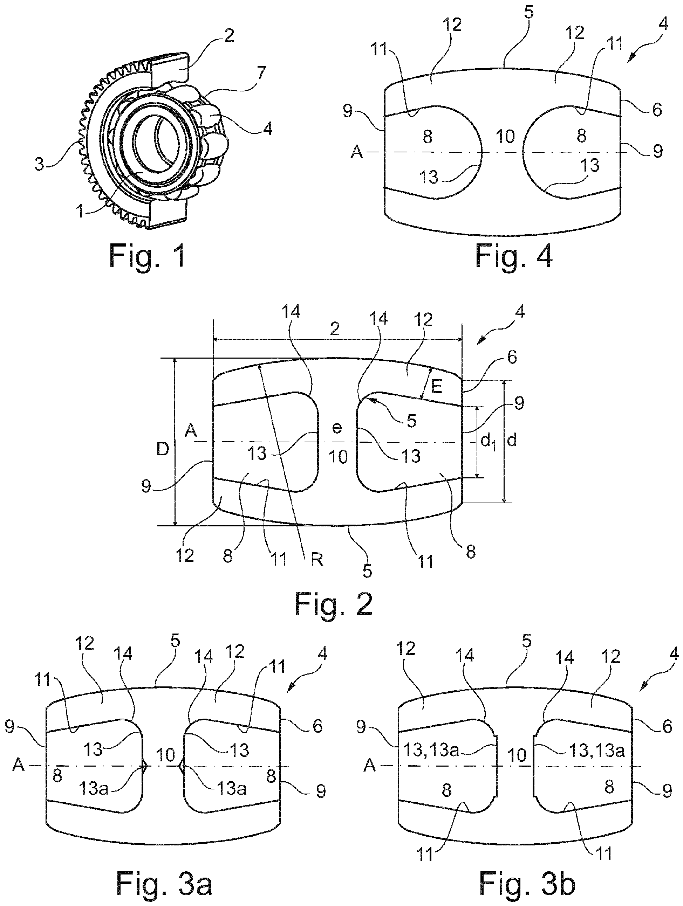

En relation avec la figure 1, on décrit ci-dessous un mode de réalisation d'un palier à roulement sous la forme d'un roulement satellite de réducteur épicycloïdal pour une boîte de transmission d'hélicoptère. Le train épicycloïdal est un principe mécanique efficace pour transmettre de la puissance et réduire la vitesse dans un encombrement réduit. Toutefois, cet ensemble mécanique nécessitant plusieurs roulements, typiquement entre cinq et dix, il présente un poids important.

Le roulement comprend une bague intérieure 1 et une bague extérieure 2. Pour cette application, la surface extérieure de la bague extérieure 2 est pourvue d'un moyen d'engrenage formé de dentures axiales 3. En variante non représentée, un palier à roulement selon l'invention peut trouver son application dans un autre domaine dans lequel notamment un gain de poids dudit palier est souhaitable.

Les bagues 1, 2 comprennent chacune une piste de roulement entre lesquelles est disposée une rangée de rouleaux 4 de sorte à permettre la rotation relative desdites bagues.

On décrit ci-dessous un mode de réalisation des rouleaux 4 qui présentent chacun une surface extérieure 5 de révolution autour d'un axe de symétrie A et une face latérale 6 disposée de chaque côté de ladite surface extérieure. Compte tenu de la puissance à transmettre et du rapport de réduction important, les rouleaux 4 peuvent être réalisés en matériau métallique, notamment en acier à roulement de type 100Cr6. En variante, les rouleaux 4 peuvent être réalisés en matériau céramique.

Dans le palier, les rouleaux 4 sont destinés à tourner autour de leur axe de symétrie A lors de la rotation dudit palier, lesdits rouleaux étant en appui sur les pistes de roulement par l'intermédiaire de leur surface extérieure 5. Par ailleurs, lors de la rotation, les faces latérales 6 sont guidées le long d'un épaulement ou de la cage de rétention 7 de sorte à maintenir les rouleaux 4 dans le palier. Dans la réalisation représentée, la surface extérieure 5 présente une géométrie sphérique en tonneau de rayon R (couramment appelé rouleau tonneau) dans laquelle le diamètre d des faces latérales 6 est inférieur au diamètre maximal D de ladite surface extérieure. Dans le mode de réalisation représenté, la géométrie tonneau est symétrique avec le diamètre maximal D formé au centre de la surface extérieure 5. En variante, la géométrie tonneau peut être dissymétrique avec le diamètre maximal D décalé d'un côté ou de l'autre par rapport centre de la surface extérieure 5.

Les faces latérales 6 s'étendent respectivement dans un plan transversal par rapport à l'axe de symétrie A, les diamètres d étant mesurés dans les plans transversaux et lesdits plans étant espacés d'une longueur L correspondant à celle du rouleau 4. En variante non représentée, le rouleau 4 peut présenter une géométrie cylindrique ou conique.

Pour obtenir un gain de poids dans le palier, l'invention propose un allégement des rouleaux 4 qu'il intègre. Pour ce faire, les rouleaux 4 présentent deux évidements 8 qui sont réalisés, notamment par perçage, tournage ou fraisage, respectivement sur une face latérale 6 en s'étendant suivant l'axe de symétrie A. Les évidements 8 présentent une ouverture 9 formée sur la face latérale 6 et sont séparés axialement par un pont de matière 10.

Toutefois, les rouleaux 4 sont soumis à une fatigue structurale sous l'effet des cycles de charges / décharges qu'ils subissent dans le temps. Afin de satisfaire aux exigences fonctionnelles du palier, notamment relativement à cette fatigue, tout en diminuant le poids, l'invention propose de réduire la quantité de matière des rouleaux 4 dans les zones les moins sollicitées mécaniquement et de la conserver ailleurs.

Pour ce faire, les évidements 8 sont délimités chacun par une surface latérale 11 de révolution dont la géométrie est tronconique divergente depuis l'ouverture 9 vers le pont de matière 10. Ainsi, la forme en contre-dépouille des évidements 8 permet un gain de masse conséquent, notamment de l'ordre de 25% par rapport à un rouleau plein, et le pont de matière 10 permet de conserver la rigidité nécessaire à la tenue en fatigue. En particulier, on conserve un maximum de matière dans la zone de plus grand diamètre D du rouleau 4 qui est la plus sollicitée par le contact entre la surface extérieure 5 et les pistes de roulement.

En effet, le diamètre maximal D de la surface extérieure 5 est disposé autour du pont de matière 10, au centre de ladite surface dans le mode de réalisation représenté. Ainsi, la zone de contact (dite de Hertz) entre un rouleau 4 et les pistes de roulement est positionnée au droit du centre du rouleau 4, c'est-à-dire au droit du pont de matière 10, la profondeur des contraintes de Hertz étant directement liée au niveau de pression de contact entre le rouleau 4 et les pistes de roulement.

En outre, la forme de révolution des évidements 8 permet de ne pas modifier l'équilibrage du rouleau 4 et les formes extérieures ne sont pas affectées par rapport à celles d'un rouleau plein, de sorte à ne pas entraîner de gros changement dans la fabrication et l'assemblage des roulements.

Chaque évidement 8 est entouré par une paroi de révolution 12 qui est délimitée radialement entre la surface latérale 11 et la partie de la surface extérieure 5 qui est disposée radialement en regard. La réalisation des évidements 8 en contre-dépouille permet notamment d'agencer la surface latérale 11 de sorte que l'épaisseur E de la paroi 12 soit sensiblement constante. En particulier, pour des rouleaux 4 tonneau, l'angle de divergence de la surface latérale 11 peut être sensiblement égal à celui de la surface extérieure 5 de sorte à obtenir une épaisseur E de paroi 12 constante.

Dans un exemple de réalisation permettant un bon compromis entre le poids et la résistance à la fatigue, l'épaisseur E de la paroi 12 peut être comprise entre 10 % et 40 % du diamètre maximal D de la surface extérieure 5.

Selon une autre caractéristique avantageuse relativement à ce compromis qui est représentée sur les figures 2 et 3, chaque évidement 8 peut présenter un fond 13 qui s'étend radialement sur le pont de matière 10, la surface latérale 11 étant reliée audit fond par un congé 14 formant un rayon r. En particulier, le rayon r du congé 14 peut être supérieur à 1,5 mm. Ainsi, sur la zone la plus sollicitée des rouleaux 4, on élimine tout risque de surcontrainte locale due à des angles vifs ou à des raccordements de surfaces non maitrisées. Dans le mode de réalisation représenté sur la figure 4, chaque évidement 8 présente un fond 13 qui forme un rayon de raccordement avec la surface latérale 11.

Par ailleurs, comme représenté sur les figures 3, le fond radial 13 peut présenter un embrèvement 13a, respectivement de forme conique (figure 3a) au voisinage du centre dudit fond ou de forme allongée sur sensiblement toute la hauteur dudit fond (figure 3b).

Selon une autre caractéristique avantageuse de l'invention, l'ouverture 9 présente un diamètre $d_1$ mesuré sur la face latérale 6 et le pont de matière 10 présente une longueur e, ledit diamètre et ladite longueur remplissant la condition géométrique suivante:

$$0,1 \leq \frac{e}{d_1} \leq 1$$

. Ainsi, les évidements 8 sont agencés pour conserver une épaisseur de paroi 12 suffisante pour résister mécaniquement aux sollicitations subies lors de la rotation du palier.

En particulier, la longueur e du pont de matière 10 est déterminée en fonction de l'application afin d'être suffisante pour être certain, avec les marges de sécurité en vigueur dans ladite application, de ne pas risquer une rupture par fatigue d'un rouleau 4 dans le palier.

En outre, pour fiabiliser le guidage sur les faces latérales 6, le diamètre $d_1$ peut être tel que $d - d_1 \geq 1mm$, de sorte à maintenir une hauteur de guidage suffisante du rouleau 4 dans le palier.

Pour permettre la rétention des rouleaux 4 dans l'espace de roulement lors de la rotation du palier, lesdits rouleaux sont disposés dans une cage de rétention 7 de sorte à pouvoir tourner autour de leur axe de symétrie A en étant en appui sur les organes 1, 2 par l'intermédiaire de leur surface extérieure 5.

Selon une réalisation, la cage 7 est formée d'une seule pièce, notamment par usinage d'un matériau métallique, pour comprendre une première couronne et, décalée axialement, une deuxième couronne, lesdites couronnes présentant un même diamètre. La cage 7 comprend en outre une pluralité de traverses axiales qui s'étendent entre lesdites couronnes de sorte à former entre deux traverses adjacentes et les couronnes un logement de rétention d'un rouleau 4. En particulier, la géométrie interne du logement est formée pour épouser la périphérie du rouleau 4 en permettant sa rotation autour de son axe de symétrie A.

En outre, chaque face latérale 6 d'un rouleau 4 est disposée en regard de respectivement une face latérale d'un logement, un moyen d'accrochage dudit rouleau étant formé sur chaque face latérale dudit logement. Selon une réalisation, le moyen d'accrochage comprend une saillie axiale engagée dans un évidement 8 du rouleau 4 de sorte à maintenir en rotation ledit rouleau dans ledit logement.

On donne ci-dessous un exemple numérique pour les dimensions géométriques caractéristiques d'un rouleau 4 selon l'invention :

> L = 30mm
> D = 20 mm
> R = 50mm
> d = 16 mm
> $d_1$ = 10 mm
> r = 2 mm
> e = 6 mm
> E = 5 mm

Sur ce rouleau 4, l'allègement selon l'invention permet de gagner environ 20g sur 70g ce qui est conséquent et très intéressant pour l'application considérée.

## Revendications

1. Rouleau (4) pour palier à roulement, ledit rouleau présentant une surface extérieure (5) de révolution autour d'un axe de symétrie (A) et une face latérale (6) disposée de chaque côté de ladite surface extérieure, ledit rouleau étant destiné à tourner dans ledit palier autour de son axe de symétrie (A) en étant en appui sur sa surface extérieure (5), ledit rouleau présentant deux évidements (8) qui sont réalisés respectivement sur chaque face latérale (6) en s'étendant suivant l'axe de symétrie (A), lesdits évidements présentant une ouverture (9) formée sur la face latérale (6) et étant séparés axialement par un pont de matière (10), ledit rouleau étant **caractérisé en ce que** les évidements (8) sont délimités chacun par une surface latérale de révolution (11) dont la géométrie est tronconique divergente depuis ladite ouverture vers ledit pont de matière.

2. Rouleau pour palier à roulement selon la revendication 1, **caractérisé en ce que** chaque évidement (8) est entouré par une paroi de révolution (12) qui est délimitée radialement entre la surface latérale (11) et la partie de la surface extérieure (5) qui est disposée radialement en regard, ladite surface latérale étant agencée de sorte que l'épaisseur (E) de ladite paroi soit sensiblement constante.

3. Rouleau pour palier à roulement selon la revendication 2, **caractérisé en ce que** l'épaisseur (E) de la paroi (12) est comprise entre 10 % et 40 % du diamètre maximal (D) de la surface extérieure (5).

4. Rouleau pour palier à roulement selon l'une quelconque des revendications 1 à 3, **caractérisé en ce que** chaque évidement (8) présente un fond (13) qui s'étend radialement sur le pont de matière (10), la surface latérale (11) étant reliée audit fond par un congé (14) formant un rayon (r).

5. Rouleau pour palier à roulement selon la revendication 4, **caractérisé en ce que** le rayon (r) du congé (14) est supérieur à 1,5 mm.

6. Rouleau pour palier à roulement selon l'une quelconque des revendications 1 à 3, **caractérisé en ce que** chaque évidement (8) présente un fond (13) qui forme un rayon de raccordement avec la surface latérale (11).

7. Rouleau pour palier à roulement selon l'une quelconque des revendications 1 à 6, **caractérisé en ce que** l'ouverture (9) présente un diamètre ($d_1$) mesuré sur la face latérale (6) et le pont de matière (10) présente une longueur (e), ledit diamètre et ladite longueur remplissant la condition géométrique suivante :

$$0,1 \le \frac{e}{d_1} \le 1.$$

8. Rouleau pour palier à roulement selon l'une quelconque des revendications 1 à 7, **caractérisé en ce que** les faces latérales (6) présentent un diamètre (d) mesuré dans un plan transversal, l'ouverture (9) présentant un diamètre ($d_1$) qui est tel que : $d - d_1 \ge 1mm.$

9. Rouleau pour palier à roulement selon l'une quelconque des revendications 1 à 8, **caractérisé en ce que** la surface extérieure (5) présente une géométrie sphérique en tonneau dans laquelle le diamètre (d) des faces latérales (6) est inférieur au diamètre maximal (D) de ladite surface extérieure, ledit diamètre maximal étant formé autour du pont de matière (10).

10. Palier à roulement comprenant un organe intérieur (1) et un organe extérieur (2) entre lesquels sont montés des rouleaux (4) selon l'une quelconque des revendications 1 à 9, lesdits rouleaux étant disposés dans une cage de rétention (7) de sorte à pouvoir tourner autour de leur axe de symétrie (A) en étant en appui sur lesdits organes par l'intermédiaire de leur surface extérieure (5).

**11.** Palier à roulement selon la revendication 10, **caractérisé en ce que** la cage de rétention (7) comprend deux couronnes et une pluralité de traverses axiales s'étendant entre lesdites couronnes de sorte à former entre deux traverses adjacentes et les couronnes un logement de rétention d'un rouleau (4), chaque face latérale (6) dudit rouleau étant disposée en regard de respectivement une face latérale dudit logement, un moyen d'accrochage dudit rouleau étant formé sur chaque face latérale dudit logement, ledit moyen d'accrochage comprenant une saillie axiale engagée dans un évidement (8) dudit rouleau de sorte à maintenir en rotation ledit rouleau dans ledit logement.

**12.** Palier à roulement selon la revendication 11, **caractérisé en ce que** la surface extérieure de l'organe extérieur (2) est pourvue d'un moyen d'engrenage (3) pour son utilisation dans un train épicycloïdal.

**Patentansprüche**

**1.** Rolle (4) für ein Wälzlager, wobei die Rolle eine Außenfläche (5) zur Rotation um eine Symmetrieachse (A) und eine auf jeder Seite der Außenfläche angeordnete Seitenfläche (6) aufweist, wobei die Rolle dazu bestimmt ist, in dem Lager um ihre Symmetrieachse (A) zu drehen, während sie an ihrer Außenfläche (5) abgestützt ist, wobei die Rolle zwei Aussparungen (8) aufweist, die jeweils an jeder Seitenfläche (6) ausgeführt sind, während sie sich entlang der Symmetrieachse (A) erstrecken, wobei die Aussparungen eine Öffnung (9) aufweisen, die an der Seitenfläche (6) gebildet ist, und axial durch einen Materialsteg (10) getrennt sind, wobei die Rolle **dadurch gekennzeichnet ist, dass** die Aussparungen (8) jeweils durch eine seitliche Rotationsfläche (11) begrenzt sind, deren Geometrie von der Öffnung zum Materialsteg hin kegelstumpfförmig divergiert.

**2.** Rolle für ein Wälzlager nach Anspruch 1, **dadurch gekennzeichnet, dass** jede Aussparung (8) von einer Rotationswand (12) umgeben ist, die radial zwischen der Seitenfläche (11) und dem radial gegenüber angeordneten Teil der Außenfläche (5) begrenzt ist, wobei die Seitenfläche so angeordnet ist, dass die Dicke (E) der Wand im Wesentlichen konstant ist.

**3.** Rolle für ein Wälzlager nach Anspruch 2, **dadurch gekennzeichnet, dass** die Dicke (E) der Wand (12) zwischen 10 % und 40 % des maximalen Durchmessers (D) der Außenfläche (5) beträgt.

**4.** Rolle für ein Wälzlager nach einem der Ansprüche 1 bis 3, **dadurch gekennzeichnet, dass** jede Aussparung (8) einen Boden (13) aufweist, der sich radial auf dem Materialsteg (10) erstreckt, wobei die Seitenfläche (11) mit dem Boden über eine Ausrundung (14) verbunden ist, die einen Radius (r) bildet.

**5.** Rolle für ein Wälzlager nach Anspruch 4, **dadurch gekennzeichnet, dass** der Radius (r) der Ausrundung (14) größer als 1,5 mm ist.

**6.** Rolle für ein Wälzlager nach einem der Ansprüche 1 bis 3, **dadurch gekennzeichnet, dass** jede Aussparung (8) einen Boden (13) aufweist, der einen Übergangsradius mit der Seitenfläche (11) bildet.

**7.** Rolle für ein Wälzlager nach einem der Ansprüche 1 bis 6, **dadurch gekennzeichnet, dass** die Öffnung (9) einen Durchmesser ($d_1$), gemessen an der Seitenfläche (6), aufweist und der Materialsteg (10) eine Länge (e) aufweist, wobei der Durchmesser und die Länge die folgende geometrische Bedingung erfüllen:

$$0{,}1 \ \leq \ \frac{e}{d_1} \leq 1.$$

**8.** Rolle für ein Wälzlager nach einem der Ansprüche 1 bis 7, **dadurch gekennzeichnet, dass** die Seitenflächen (6) einen Durchmesser (d), gemessen in einer Querebene, aufweisen, wobei die Öffnung (9) einen Durchmesser ($d_1$) aufweist, der dergestalt ist, dass: $d - d_1 \geq 1mm.$

**9.** Rolle für ein Wälzlager nach einem der Ansprüche 1 bis 8, **dadurch gekennzeichnet, dass** die Außenfläche (5) eine Tonnengeometrie aufweist, bei der der Durchmesser (d) der Seitenflächen (6) kleiner als der maximale Durchmesser (D) der Außenfläche ist, wobei der maximale Durchmesser um den Materialsteg (10) herum gebildet wird.

**10.** Wälzlager, umfassend ein inneres Bauteil (1) und ein äußeres Bauteil (2), zwischen denen Rollen (4) nach einem der Ansprüche 1 bis 9 montiert sind, wobei die Rollen so in einem Rückhaltekäfig (7) angeordnet sind, dass sie um ihre Symmetrieachse (A) drehen können, während sie über ihre Außenfläche (5) an den Bauteilen abgestützt sind.

**11.** Wälzlager nach Anspruch 10, **dadurch gekennzeichnet, dass** der Rückhaltekäfig (7) zwei Kränze und eine Vielzahl von axialen Streben umfasst, die sich zwischen den Kränzen so erstrecken, dass zwischen zwei benachbarten Streben und den Kränzen eine Rückhalteaufnahme für eine Rolle (4) gebildet wird, wobei jede Seitenfläche (6) der Rolle jeweils gegenüber einer Seitenfläche der Aufnahme angeordnet ist, wobei an jeder Seitenfläche der Aufnahme ein Einhakmittel der Rolle gebildet ist, wobei das Einhakmittel einen axialen Vorsprung umfasst, der in eine Aussparung (8) der Rolle eingreift, so dass die Rolle beim Drehen in der Aufnahme gehalten wird.

12. Wälzlager nach Anspruch 11, **dadurch gekennzeichnet, dass** die Außenfläche des äußeren Bauteils (2) mit einem Verzahnungsmittel (3) zu seiner Verwendung in einem Planetengetriebe versehen ist.

**Claims**

1. Roller (4) for a rolling bearing, said roller having an outer surface (5) revolving about an axis of symmetry (A) and a lateral face (6) arranged on either side of said outer surface, said roller being intended to rotate in said bearing about the axis of symmetry (A) thereof while bearing on the outer surface (5) thereof, said roller having two recesses (8) produced respectively on each lateral face (6) extending along the axis of symmetry (A), said recesses having an opening (9) formed on the lateral face (6) and being separated axially by a material bridge (10), said roller being **characterised in that** the recesses (8) are each defined by a lateral revolving surface (11), the shape whereof is divergent tapered from said opening to said material bridge.

2. Roller for a roller bearing according to claim 1, **characterised in that** each recess (8) is surrounded by a revolving wall (12) defined radially between the lateral surface (11) and the part of the outer surface (5) arranged radially opposite, said lateral surface being arranged such that the thickness (E) of said wall is substantially constant.

3. Roller for a rolling bearing according to claim 2, **characterised in that** the thickness (E) of the wall (12) is between 10 % and 40 % of the maximum diameter (D) of the outer surface (5).

4. Roller for a rolling bearing according to any of claims 1 to 3, **characterised in that** each recess (8) has a base (13) extending radially on the material bridge (10), the lateral surface (11) being connected to said base by a fillet (14) forming a radius (r).

5. Roller for a rolling bearing according to claim 4, **characterised in that** the radius (r) of the fillet (14) is greater than 1.5 mm.

6. Roller for a rolling bearing according to any of claims 1 to 3, **characterised in that** each recess (8) has a base (13) forming a connection radius with the lateral surface (11).

7. Roller for a rolling bearing according to any of claims 1 to 6, **characterised in that** the opening (9) has a diameter ($d_1$) measured on the lateral face (6) and the material bridge (10) has a length (e), said diameter and said length meeting the following geometric condition: $0.1 \leq \dfrac{e}{d_1} \leq 1$.

8. Roller for a rolling bearing according to any of claims 1 to 7, **characterised in that** the lateral faces (6) have a diameter (d) measured in a transverse plane, the opening (9) having a diameter ($d_1$) which is such that: $d - d_1 \geq 1 mm$.

9. Roller for a rolling bearing according to any of claims 1 to 8, **characterised in that** the outer surface (5) has a spherical barrel shape wherein the diameter (d) of the lateral faces (6) is less than the maximum diameter (D) of said outer surface, said maximum diameter being formed about the material bridge (10).

10. Rolling bearing comprising an inner member (1) and an outer member (2) between which rollers (4) according to any of claims 1 to 9 are fitted, said rollers being arranged in a retention cage (7) so as to be able to rotate about the axis of symmetry (A) thereof while bearing on said members via the outer surface (5) thereof.

11. Rolling bearing according to claim 10, **characterised in that** the retention cage (7) comprises two collars and a plurality of axial cross members extending between said collars so as to form between two adjacent cross members and the collars a housing for holding a roller (4), each lateral face (6) of said roller being arranged opposite respectively a lateral face of said housing, means for coupling said roller being formed on each lateral face of said housing, said coupling means comprising an axial projection inserted into a recess (8) of said roller so as to keep said roller rotating in said housing.

12. Rolling bearing according to claim 11, **characterised in that** the outer surface of the outer member (2) is provided with gear means (3) for the use thereof in a planetary gear.

Fig. 1

Fig. 4

Fig. 2

Fig. 3a

Fig. 3b

**EP 2 441 973 B1**

## RÉFÉRENCES CITÉES DANS LA DESCRIPTION

**Documents brevets cités dans la description**

- DE 102006052044

- FR 1001372